Europäisches Patentamt

European Patent Office

Office européen des brevets

(11) Numéro de publication: **0 223 678**
**A1**

(12) **DEMANDE DE BREVET EUROPEEN**

(21) Numéro de dépôt: 86402393.2

(22) Date de dépôt: 24.10.86

(51) Int. Cl.⁴: **H 02 K 29/08**
H 02 K 29/00, H 02 K 21/22

(30) Priorité: 31.10.85 FR 8516233

(43) Date de publication de la demande:
27.05.87 Bulletin 87/22

(84) Etats contractants désignés: DE GB IT NL SE

(71) Demandeur: ETUDES TECHNIQUES ET
REPRESENTATIONS INDUSTRIELLES E.T.R.I Société
Anonyme
8 rue Boutard
F-92200 Neuilly-sur-Seine (FR)

(72) Inventeur: Gruber, François René
1105 Virginia Avenue
Monroe North California 28110 (US)

Purcell, Ronald Dean
4821 Secrest Shortcut Road
Monroe (US)

(74) Mandataire: Bouju, André
Cabinet Bouju 38 avenue de la Grande Armée
F-75017 Paris (FR)

(54) Moteur à courant continu commuté électroniquement.

(57) Un aimant annulaire (22) coopère avec une armature (15) entourée par une bobine (12). Une sonde à effet HALL (37) commande les changements de sens du courant dans la bobine (12).

La bobine (12) est entourée par l'aimant (22) et son axe (YY) est disposé tangentiellement par rapport à celui de l'aimant. L'armature (15) présente une pièce polaire unique coudée (17, 18). L'excitation de la bobine est commandée pour que la polarité de la pièce polaire (17, 18) tende toujours à être la même que celle du pôle magnétique permanent qui fait face à l'extrémité libre de la pièce polaire.

Utilisation dans les ventilateurs, pour simplifier leur fabrication et permettre leur démarrage en toute circonstance.

FIG.14

EP 0 223 678 A1

## Description

"Moteur à courant continu commuté électroniquement"

La présente invention concerne un moteur à courant continu commuté électriquement comprenant un rotor présentant sur l'une de ses faces annulaires des pôles magnétiques permanents déterminés par une aimantation radiale, ayant alternativement des pôlarités Sud et Nord dans la direction circonférentielle ; un stator comprenant au moins un bobinage dont un axe s'étend selon une direction tangentielle par rapport à un axe du rotor, et qui entoure un noyau magnétique appartenant à une armature comprenant à l'une des extrémités du noyau une pièce polaire située en regard du trajet des pôles magnétiques permanents ; un détecteur de la position angulaire du rotor ; et des moyens de commutation sensibles à un signal du détecteur pour commuter le courant dans le bobinage en fonction de la position angulaire du rotor.

Un tel moteur est connu d'après les documents EP-A-14 461 et 141 479 pour l'application à des ventilateurs axiaux plats dans lesquels les pales de l'hélice sont fixées radialement vers l'intérieur du rotor.

Cette configuration est simple et bon marché mais elle présente des inconvénients, notamment à cause de la position externe du stator, par rapport au rotor, ce qui oblige à le loger avec son circuit de commande dans la carcasse du ventilateur, c'est-à-dire dans un espace particulièrement exigu. Ceci est gênant en soi et peut se révéler désavantageux, notamment en ce qui concerne l'emplacement du détecteur de position du rotor qui commande la commutation. Cet emplacement doit, en effet, être soigneusement déterminé. En outre, avec un stator extérieur de ce type, il n'est pas possible de réaliser un blindage du moteur vis-à-vis des perturbations radio-magnétiques. Or celles-ci peuvent être suffisamment puissantes pour perturber le fonctionnement de l'appareil dans lequel le ventilateur est inclus. Un autre inconvénient est que ce moteur ne démarre pas dans toutes les positions du rotor et qu'il est donc nécessaire de prévoir un dispositif particulier pour pallier ce défaut.

Le but de la présente invention est de remédier à ces inconvénients en proposant un moteur à courant continu commuté électroniquement qui soit simple, robuste et bon marché, et qui fonctionne sans problème, notamment au démarrage.

Suivant l'invention, le moteur est caractérisé en ce que la face portant les pôles magnétiques permanents est une face interne du rotor et entoure l'armature et le bobinage, et en ce qu'à l'opposé de la pièce polaire, l'extrémité de l'armature est constituée par une extrémité du noyau magnétique située à distance du trajet des pôles magnétiques et se trouve sensiblement entourée par l'extrémité du bobinage.

On aboutit ainsi à une disposition particulièrement simple, facile à réaliser, et dans laquelle les constituants statoriques tels que le bobinage ou le détecteur ne posent pas de problème de disposition.

L'armature est très facile à monter dans le bobinage puisqu'elle ne dépasse significativement du bobinage qu'à une extrémité de ce dernier. De façon surprenante, malgré cette simplification, les performances du moteur sont excellentes. De façon encore plus surprenante, il s'est avéré que le moteur selon l'invention démarre en toutes circonstances et sans dispositif annexe.

D'autres particularités et avantages de l'invention ressortiront encore de la description ci-après.

Aux dessins annexés, donnés à titre d'exemples non limitatifs :
- la figure 1 est une vue du stator d'un moteur selon l'invention, monté dans la carcasse d'un ventilateur, en coupe selon la ligne I-I de la figure 2 ;
- la figure 2 est une vue en coupe axiale du ventilateur assemblé, selon la ligne II-II de la figure 1 ;
- la figure 3 est un schéma du circuit électronique de commande ;
- la figure 4 est une vue en coupe axiale de la bobine;
- la figure 5 est une vue en bout de la bobine, avec arrachement ;
- la figure 6 est une vue de profil de l'armature ;
- la figure 7 est une vue en perspective de l'armature;
- la figure 8 est une vue en coupe axiale du canon support de l'arbre axial du rotor ;
- la figure 9 est une demi-vue en bout du canon de la figure 8 ;
- la figure 10 est une vue de profil, partiellement en coupe axiale, du palier lisse destiné à être monté dans ce canon ;
- les figures 11 à 13 sont des vues analogues aux figures 8 à 10 respectivement mais concernant une variante de réalisation du canon support de l'axe du moteur et du palier lisse associé ;
- la figure 14 est est une vue en coupe radiale de l'ensemble stator et mobile du ventilateur ;
- la figure 15 est une vue de la bobine et de son montage, en coupe partielle selon la ligne XV-XV de la figure 16, selon une variante de réalisation ;
- la figure 16 est une vue de la disposition selon la figure 15, en coupe selon la ligne XVI-XVI de la figure 15; et
- la figure 17 est une vue en perspective partielle de l'âme de la bobine montée dans son support.

Le moteur selon l'invention va être décrit ci-après dans son application à un ventilateur de type axial, c'est-a-dire un ventilateur mettant l'air en mouvement selon une direction parallèle à son axe.

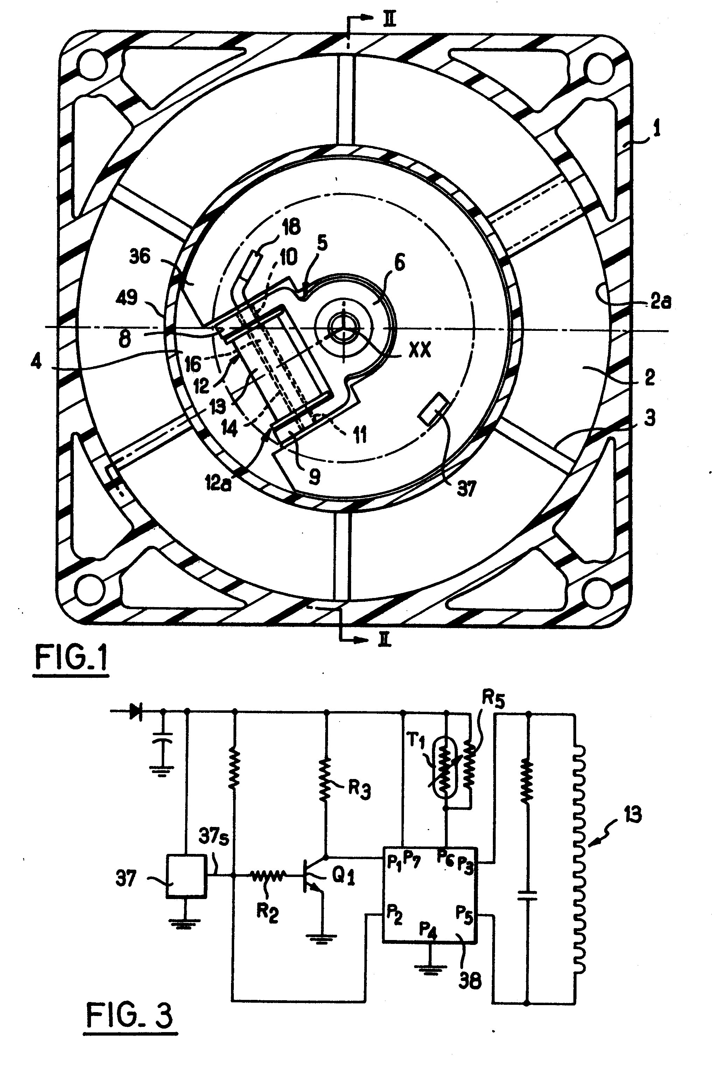

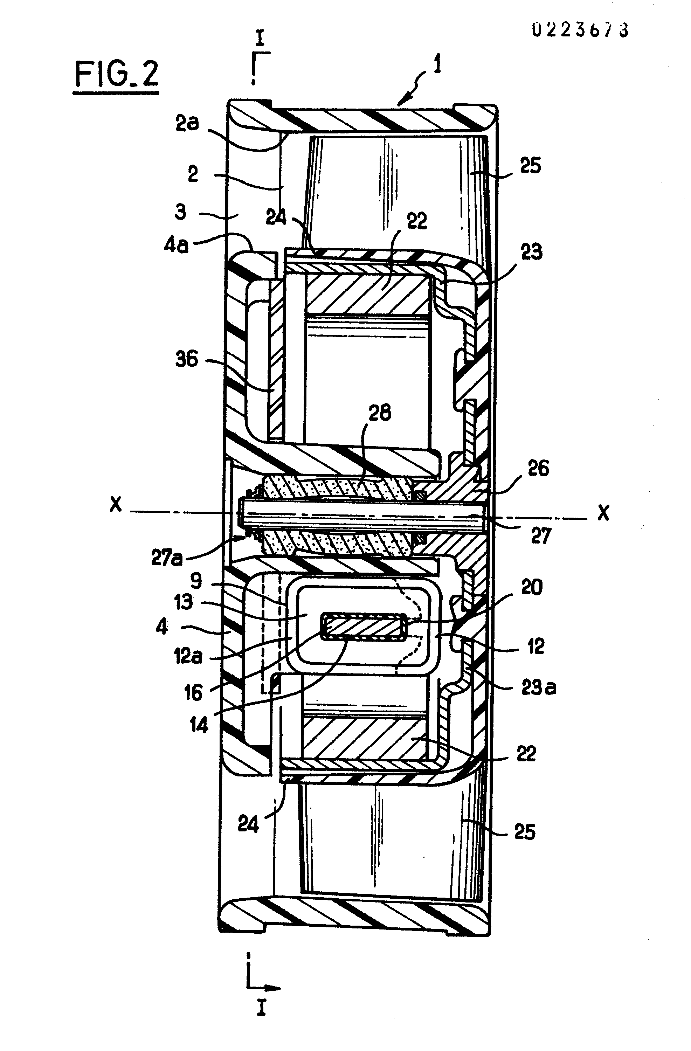

Comme le montrent les figures 1 et 2, le ventilateur comprend une carcasse 1 dont une paroi sensiblement cylindrique 2a délimite extérieurement un conduit annulaire 2. De la paroi 2a partent radialement vers l'intérieur des bras 3 supportant une platine circulaire centrale 4 dont le bord périphérique 4a contribue à délimiter intérieurement le conduit annulaire 2, à une extrémité axiale de ce dernier.

L'ensemble formé par ces éléments est avantageusement réalisé d'une seule pièce en matière plastique moulée. Ceci permet de faire également venir de moulage avec la platine 4, un support 5 comportant un canon 6 coaxial au conduit 2 du ventilateur et s'étendant à partir de la platine 4 sur la majeure partie de la dimension axiale du conduit 2.

Le support 5 comporte également, latéralement sur l'extérieur du canon 6, un chevalet comprenant deux bras 8 et 9, munis d'échancrures respectives 10 et 11 s'ouvrant à l'opposé de la platine 4.

Le ventilateur comprend en outre une bobine 12 (figures 1, 4 et 5) qui comprend une âme 12a en matière isolante définissant un conduit axial 14 de section rectangulaire, et autour de laquelle est enroulé un fil électriquement conducteur 13.

Une armature 15 réalisée en matériau ferro-magnétique est engagée dans le conduit axial 14. L'armature 15 est réalisée à partir d'une lame métallique d'épaisseur constante. Elle définit un noyau parallélépipédique 16 qui est engagé dans le conduit 14 de l'âme 12a. Le noyau 16 est parallélépipédique et son profil transversal correspond à celui du conduit 14.

A l'une des extrémités du noyau 16, l'armature 15 présente au-delà du conduit 14 un coude obtus 17 auquel se raccorde un épanouissement polaire 18 de forme rectangulaire.

Au montage on engage dans le conduit 14 l'armature 15 par son extrémité opposée à l'épanouissement 18 jusqu'à ce que cette extrémité dépasse légèrement à l'autre extrémité du conduit 14, puis on engage la bobine 12 entre les bras 8 et 9 du chevalet, tandis que de part et d'autre de la bobine 12, l'armature 15 se positionne dans les échancrures 10 et 11 des bras 8 et 9.

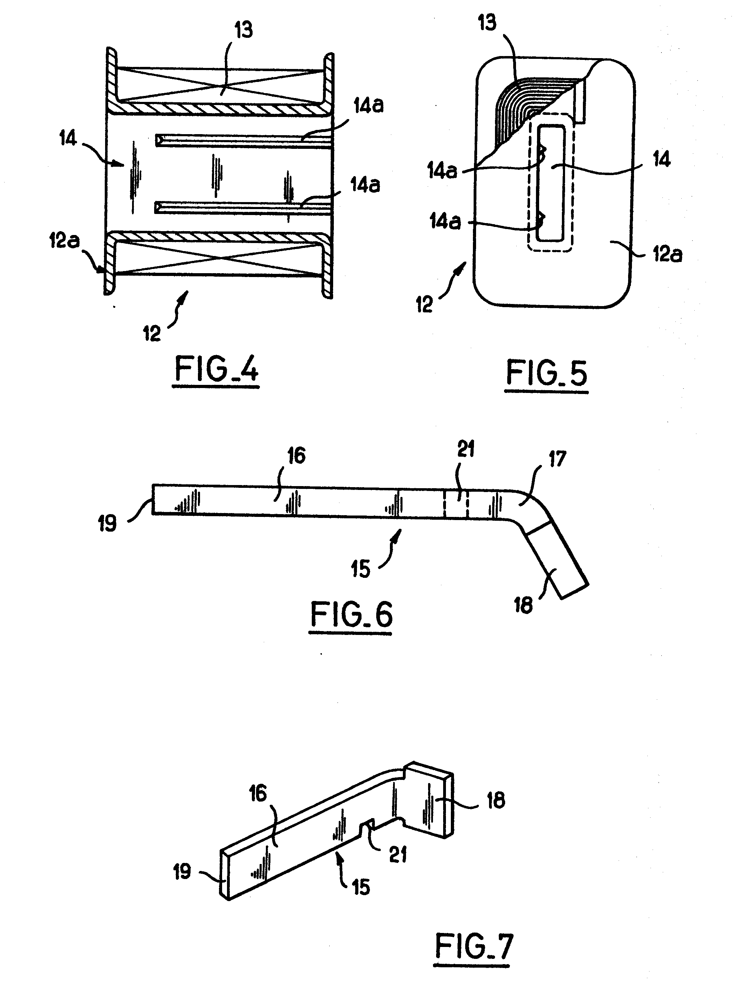

Après ce montage, une face d'extrémité 19 que présente le noyau 16 à l'opposé de l'épanouissement 18 se trouve dans le plan de la paroi extérieure du bras 9 adjacent, tandis que le coude 17 et l'épanouissement polaire 18 sont situés à l'extérieur du bras 8, et que la bobine 12 se trouve entre les bras 8 et 9. L'extrémité 19 constitue l'extrémité de l'armature 15 à l'opposé de l'épanouissement 18. Les entrées des échancrures 10 et 11 sont prévues avec un rétrécissement (l'entrée 20 de l'échancrure 11 est visible sur la figure 2) de manière à retenir dans le chevalet 8, 9 l'armature 15, entrée à force dans le sens transversal, et la bobine 12 portée par celle-ci. Le maintien longitudinal de l'armature 15 est assuré au moyen d'un cran 21 découpé dans l'armature entre le noyau 16 et le coude 17. Au montage, ce cran 21 chevauche la paroi du bras latéral 8. Comme le montrent les figures 4 et 5, le conduit 14 de l'âme 12a de la bobine 12 présente sur l'une de ses faces intérieures deux nervures longitudinales 14a qui sont comprimées par l'armature 15 lorsque celle-ci est en place, et évitent par conséquent tout flottement de la bobine 12 sur l'armature 15.

L'épanouissement polaire 18 se trouve en regard de la face radialement intérieure d'un aimant annulaire 22 appartenant au rotor du moteur. La hauteur de l'épanouissement 18 est supérieure à celle du noyau 16 et sensiblement égale à celle de l'aimant 22. Par "hauteur", on entend la dimension mesurée parallèlement au grand côté de la section transversale rectangulaire du noyau 16. La hauteur est parallèle à l'axe de courbure du coude 17 et à l'axe X-X du rotor.

L'aimant 22 est fixé coaxialement contre la face interne de la paroi latérale d'une cloche métallique 23 (figure 2) qui sert également de blindage contre les perturbations radio-magnétiques susceptibles d'être engendrées par le fonctionnement du moteur. Le fond 23a de la cloche 23 ferme d'un côté, et la platine 4 de l'autre, l'espace entouré par l'aimant 22. Le bord libre de la paroi latérale de la cloche 23 fait face au bord 4a de la platine 4.

L'aimant 22 est formé de six régions aimantées radialement, couvrant chacune 60° autour de l'axe XX, de façon que, selon une direction circonférentielle, il présente alternativement des pôles nord et sud sur sa face radialement intérieure. La cloche 23 est fixée dans un moyeu d'hélice 24 en matière plastique qui est également en form de cloche s'ouvrant vers la platine 4 et recouvrant extérieurement la cloche 23. Le moyeu 24 porte des pales 25 dirigées radialement vers l'extérieur dans le conduit annulaire 2. En outre, le moyeu 24 présente en son centre un bossage 26 dirigé vers la platine 4 et dans lequel est encastré un arbre axial 27 du mobile comprenant essentiellement l'aimant 22, la cloche 23 et l'hélice.

Lorsque, au montage, l'assemblage du mobile est réalisé, l'arbre axial 27 est ensuite engagé dans le canon 6 et y est supporté en rotation par un palier lisse de forme générale cylindrique 28.

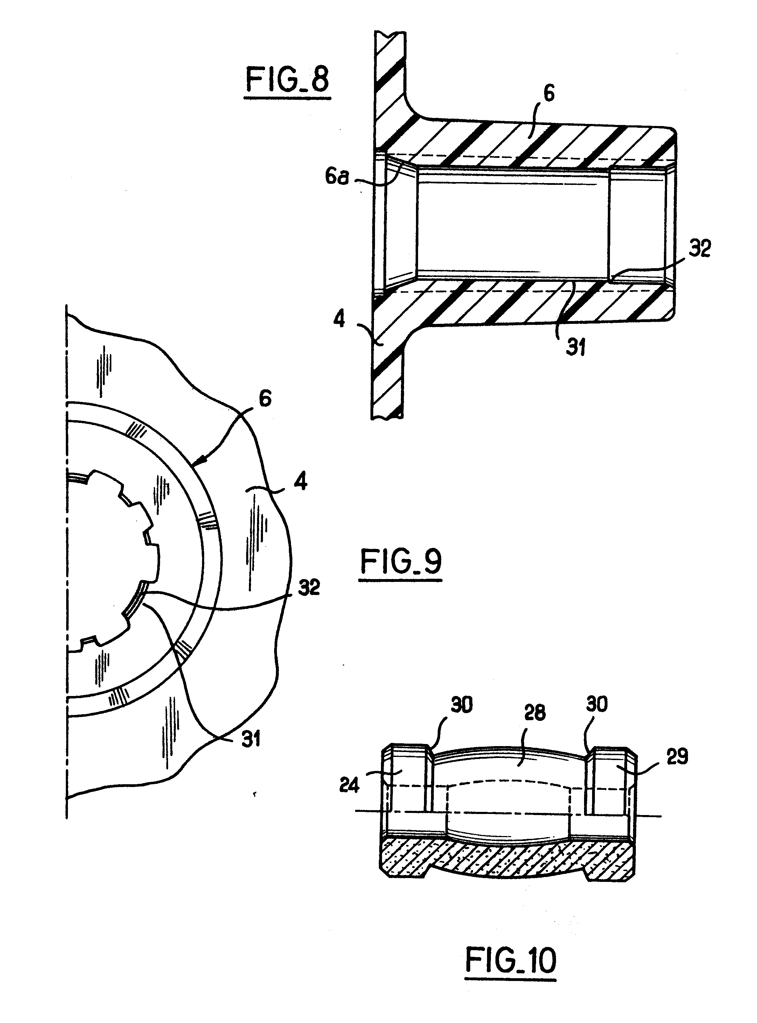

Le palier 28 a une configuration obtenue par compression axiale et ses régions terminales 29 (figure 10) ont un diamètre extérieur supérieur à celui de sa région médiane et sont munies d'une portée chanfreinée 30, sensiblement conique, adjacente à la région médiane.

L'alésage intérieur du canon 6 comporte des nervures longitudinales 31 qui sont épaulées pour définir des portées 32 (figures 8 et 9) disposées en couronnes et tournées vers l'extrémité libre du canon 6. Au montage, le palier lisse est engagé à force dans le canon 6 par un entonnoir 6a que présente ce dernier du côté de la platine 4. Le palier est ensuite poussé dans le canon 6 jusqu'à ce que la région teminale se trouvant en tête s'encliquète derrière les portées 32. Celles-ci retiennent ensuite le palier lisse à l'encontre des déplacements dans le sens axial allant des portées 32 vers l'entonnoir 6a, sens qui est celui des forces aérodynamiques s'exerçant en service sur le mobile.

Une fois l'arbre 27 engagé dans le palier lisse 28, des moyens d'arrêt 27a (figure 2) sont posés à l'extrémité libre de l'arbre 27 pour retenir l'arbre 27 dans le palier 28 à l'encontre des déplacements dans le sens axial précité.

Un circuit imprimé 36 est fixé sur la platine 4 (figure 2) du côté tourné vers l'espace entouré par l'aimant 22. Sur le circuit 36 sont soudés les différents composants d'un circuit électronique de commutation du moteur et un détecteur à effet Hall 37 qui est positionné en regard du trajet des pôles magnétiques de la face annulaire intérieure de l'aimant 22. Le détecteur 37 est sensible au sens du champ magnétique auquel il est exposé, et délivre un signal qui est fonction de ce sens. Ce signal commande le circuit d'alimentation de l'enroulement 13 de la bobine 12, de façon appropriée pour que le champ magnétique créé par la bobine 12 change de sens au rythme du défilement des pôles magnétiques permanents face à l'épanouissement polaire 18, et ce d'une façon qui sera décrite en détail plus loin.

Un exemple de circuit capable d'assurer cette fonction est représenté à la figure 3. Il utilise, pour assurer l'alimentation alternative de l'enroulement 13, un circuit intégré 38 capable de fournir entre ses sorties P3 et P5 une différence de potentiel dont le sens est fonction du niveau logique appliqué sur chacune de ses deux entrées P1 et P2. Un tel circuit est, par exemple, fabriqué par la Société TOSHIBA, sous la référence : TA 7267P. Si l'on affecte les valeurs 0 et 1 aux niveaux logiques, respectivement bas et haut appliqués sur les entrées P1 et P2, et si VH et VB sont respectivement les niveaux haut et bas des potentiels de sortie, la table logique du circuit 38, limitée aux seules fonctions utilisées dans cette application, s'écrit ainsi :

| P1 | P2 | P3 | P5 |
|----|----|----|----|
| 0 | 1 | VB | VH |
| 1 | 0 | VH | VB |

Le circuit intégré 38 comporte encore trois autres bornes : une borne P4 reliée à la masse, une borne P7 qui est reliée à l'alimentation positive du dispositif, et une borne P6 qui alimente, à l'intérieur du circuit intégré, les circuits inverseurs qui délivrent la tension de sortie. La borne P6 est reliée à l'alimentation positive à travers une thermistance T1 et une résistance en parallèle R5.

Le générateur à effet HALL 37, par exemple du type UGN-3076 T/U, fabriqué par SPRAGUE ELECTRIC CO, délivre sur sa sortie 37s un signal de niveau logique bas lorsqu'il se trouve à proximité du pôle sud d'un aimant, et bascule pour délivrer un niveau logique haut dès qu'il se trouve en présence d'un pôle nord. Dans le schéma représenté, ce signal est appliqué à la borne d'entrée P2. Il est nécessaire, de fournir en même temps, à l'entrée P1 un signal de niveau opposé, ceci afin d'assurer le fonctionnement du circuit intégré 38. Pour cela, on utilise un circuit inverseur composé d'un transistor Q1 et de ses résistances de polarisation R2 et R3. La résistance R2 est montée entre la sortie 37s et la base du transistor Q1, tandis que l'émetteur du transistor Q1 est relié à la masse et son collecteur est raccordé d'une part à l'alimentation positive par la résistance R3, et d'autre part à l'entrée P1.

En fonctionnement, si un pôle sud de l'aimant 22 se trouve en face du générateur à effet HALL 37, la sortie de celui-ci est à son niveau logique bas, de même que l'entrée P2 du circuit intégré 38. Cette tension est également appliquée à la base du transistor Q1, à travers la résistance R2, de sorte que celui-ci se bloque et délivre une tension de niveau logique haut sur son collecteur et donc sur l'entré P1 à laquelle ledit collecteur est relié. En se référant à la table logique ci-dessus, P1 étant au niveau 1 et P2 au niveau zéro, le potentiel de la sortie P3 est au niveau VH supérieur au potentiel VB sur la sortie P5, et un courant circule donc dans le sens de P3 vers P5 à travers l'enroulement 13 de la bobine, de sorte que l'armature 15 est le siège d'un champ magnétique dont le sens est fonction de celui selon lequel est bobiné l'enroulement 13.

Lorsque le rotor a tourné d'un angle tel qu'un pôle nord est à son tour placé en face du générateur à effet HALL 37, la sortie de celui-ci passe alors à son niveau haut, de même que l'entrée P2 du circuit intégré et la base du transistor Q1, qui devient conducteur, de sorte que la tension recueillie sur son collecteur est au niveau bas, ainsi que l'entrée P1 du circuit intégré 38. L'inversion des niveaux logiques d'entrée provoque l'inversion du sens du courant de sortie, et par conséquent, celle de la polarité magnétique dans l'épanouissement polaire 18 du stator. Comme la polarité permanente en face de l'épanouissement 18 a également changé, la force magnétique s'exerçant sur l'aimant 22 par interaction avec l'épanouissement polaire 18 reste de la même nature (attraction ou répulsion).

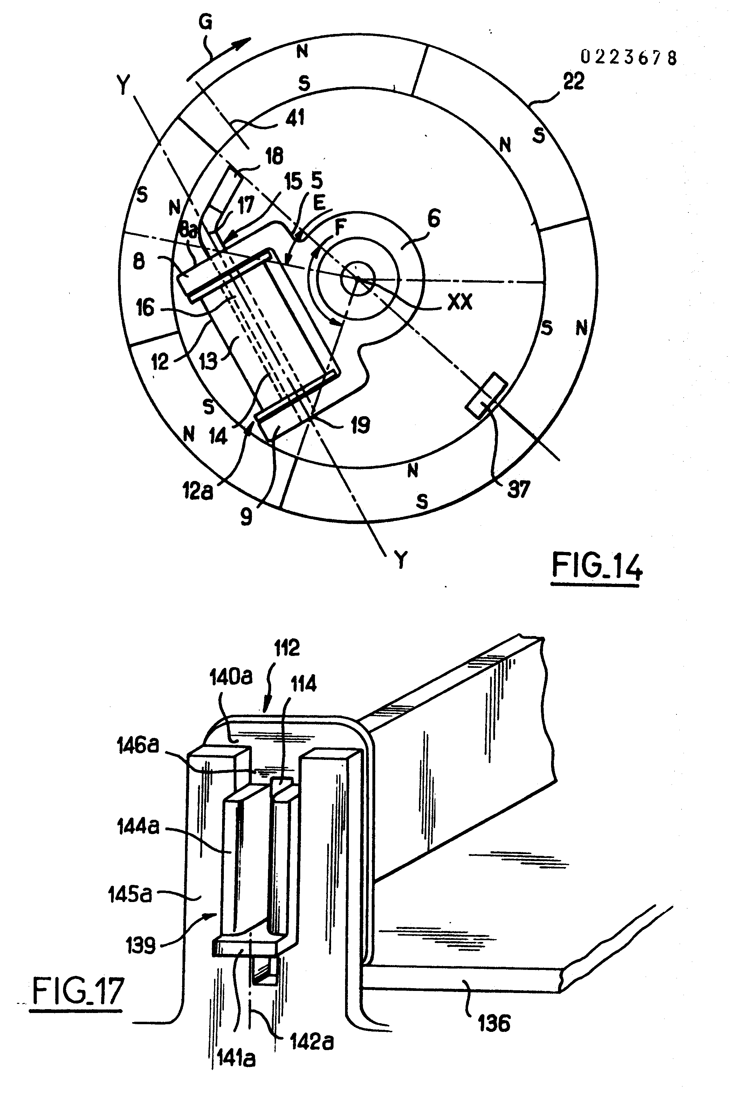

On va maintenant préciser, en référence à la figure 14, certaines particularités électromagnétiques du moteur.

La bobine 12 a un axe YY qui s'étend selon une direction tangentielle par rapport à l'axe XX du rotor qui n'est représenté que par son aimant 22. L'armature 15, considérée depuis la face externe 8a du bras jusqu'à l'épanouissement polaire 18, s'étend d'abord dans le prolongement du noyau 16, c'est-à-dire obliquement vers le trajet des pôles magnétiques intérieurs de l'aimant 22. Elle forme ensuite le coude obtus 17 de façon à s'étendre sensiblement parallèlement à la région adjacente de l'aimant 22. Ainsi, si l'on appelle "pièce polaire" la région de l'armature 15 qui émerge du bras 8, on constate que depuis la bobine 12 jusqu'à l'extrémité libre de l'épanouissement polaire 18, la pièce polaire a un profil qui est généralement convergent avec le trajet des pôles magnétiques permanents. La pièce polaire s'étend d'un seul côté d'un plan ayant pour trace YY à la figure 14, c'est-à-dire un plan passant par l'axe YY parallèlement à l'axe XX. Par rapport à ce plan, l'épanouissement polaire 18, et notamment son extrémité libre, sont situés du même côté que l'axe XX du rotor.

La pièce polaire s'inscrit dans un angle E centré sur l'axe XX et dont la valeur est sensiblement moitié de celle de l'angle également centré sur l'axe XX, dans lequel s'inscrit chaque pôle magnétique permanent.

4

L'armature 15 considérée dans son ensemble s'inscrit quant à elle dans un angle F, centré sur l'axe XX, et dont la valeur est sensiblement double de celle de l'angle précité dans lequel s'inscrit chaque pôle magnétique permanent. Grâce à la valeur de l'angle E par rapport à la dimension angulaire de chaque pôle magnétique permanent (60°), en l'absence d'excitation de la bobine 12, le rotor prend toujours par attraction entre la pièce polaire 17, 18 et un pôle magnétique permanent voisin de celle-ci, une position de repos dans laquelle l'un des pôles magnétiques permanents recouvre entièrement la pièce polaire 17, 18 et s'étend en outre au-delà de l'extrémité libre de l'épanouissement polaire 18. Le trait mixte 41 symbolise la séparation entre deux pôles magnétiques permanents adjacents dans une telle position du rotor.

Le détecteur 37 est positionné autour de l'axe XX de façon à se trouver face à une séparation entre deux pôles magnétiques permanents (situation représentée à la figure 14) lorsque l'extrémité libre de l'épanouissement polaire 18 coïncide elle aussi avec une séparation entre deux pôles magnétiques permanents. Dans ces conditions, l'inversion du sens du courant dans l'enroulement 13 est déclenchée chaque fois qu'une séparation entre deux pôles adjacents passe au droit de l'extrémité libre de l'épanouissement 18. De plus, le sens d'enroulement de l'enroulement 13 et la position angulaire du générateur 37 autour de l'axe XX par rapport à l'extrémité libre de l'épanouissement 18 sont choisis de façon que la polarité de l'épanouissement 18 soit toujours la même que celle du pôle magnétique permanent qui est en regard de l'extrémité libre de l'épanouissement 18.

De façon surprenante, il a été constaté que, avec les conditions précitées ou des conditions approchantes, le moteur démarrait en toute circonstance, et ce toujours dans le même sens, à savoir le sens selon lequel un pôle magnétique permanent passe d'abord devant le coude 17 puis devant l'épanouissement 18 (on pourrait encore dire devant le générateur 37 puis devant la bobine 12 puis devant l'épanouissement 18). Une telle aptitude au démarrage s'explique difficilement car, le rotor étant dans la position symbolisée par le trait mixte 41, l'excitation de l'enroulement 13 dans le sens déterminé par le générateur de HALL 37 correspond à une répulsion entre la pièce polaire 17, 18 et le pôle magnétique permanent situé en face, mais il n'apparaît pas clairement comment cette force de répulsion se traduit par un couple dans un sens ou dans un autre. On peut se demander si un couple initial de démarrage, même très faible, n'est pas fourni par l'autre extrémité 19 de l'armature 15, interagissant, même très faiblement, avec le pôle magnétique permanent qui lui fait face. En effet, compte tenu de la valeur de l'angle F par rapport à l'étendue angulaire de chaque pôle permanent, on est assuré qu'une telle interaction, si elle existe, est une attraction.

Lorsque la séparation entre deux pôles permanents se trouve en face de la pièce polaire, il y a répulsion du pôle quittant la pièce polaire et attraction du pôle qui est en train de recouvrir la pièce polaire. Il y a donc double effet magnétique, et ce jusqu'à ce que la séparation entre les deux pôles coïncide angulairement avec l'extrémité libre de l'épanouissement 18. A ce moment, le générateur 37 détermine l'inversion du sens du courant dans l'enroulement 13. Le rotor a le temps de parcourir un certain angle avant que l'inversion du sens du courant soit effective. Quand elle l'est, le rotor a pris une position angulaire appropriée pour que la répulsion existant entre l'armature et le rotor se traduise par un couple dans le sens de la rotation (flèche G).

Si l'on déplace angulairement le détecteur 37 autour de l'axe XX dans un sens ou dans l'autre, le rendement du moteur commence par diminuer, puis à partir d'une certaine position, le moteur s'arrête puis repart en sens inverse. Le fonctionnement en sens inverse est obtenu lorsque la polarité de l'épanouissement polaire 18 est contraire de la polarité du pôle permanent qui le recouvre. Toutefois, le fonctionnement dans ce sens, même s'il correspond à une possibilité offerte par le moteur selon l'invention, ne procure pas un rendement aussi bon que le fonctionnement dans le sens selon la flèche G.

La protection contre les surintensités de l'enroulement 13 est assurée par la thermistance T1, laquelle se trouve placée en série avec l'enroulement 13, par l'intermédiaire du trajet interne du circuit intégré 38. Quand l'intensité augmente dans le circuit du fait, par exemple, du blocage accidentel du rotor, la thermistance s'échauffe et sa résistance augmente, tendant à réduire le courant d'alimentation et, par conséquent, la tension aux bornes de l'enroulement.

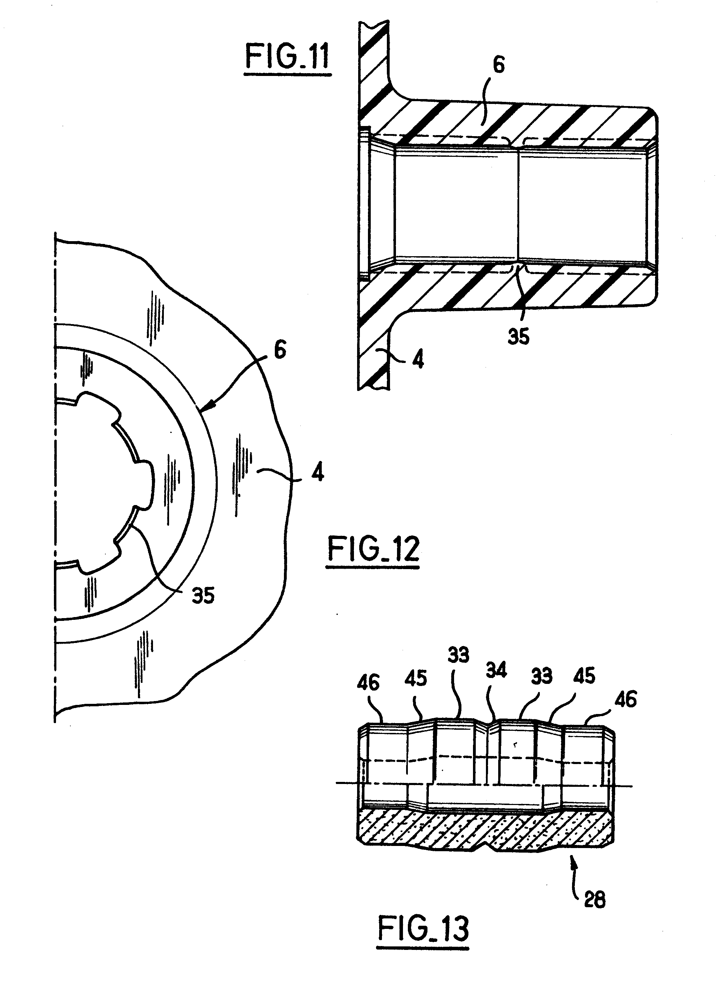

L'exemple des figures 11 à 13 concerne un autre mode de verrouillage du palier lisse 28 dans le canon 6. Selon ce mode de réalisation, le palier lisse de forme générale cylindrique 28 présente au milieu de la longueur de sa face externe une gorge annulaire 34 (figure 13), dans laquelle s'encliquètent, au montage du palier dans le canon 6, des dents 35 (figure 11) venues de moulage avec la paroi interne de l'alésage du canon. La gorge 34 est réalisée entre deux surépaisseurs annulaires 33. Chaque surépaisseur 33 se raccorde par une région conique 45 à une région terminale 46 de diamètre moindre que la surépaisseur 33.

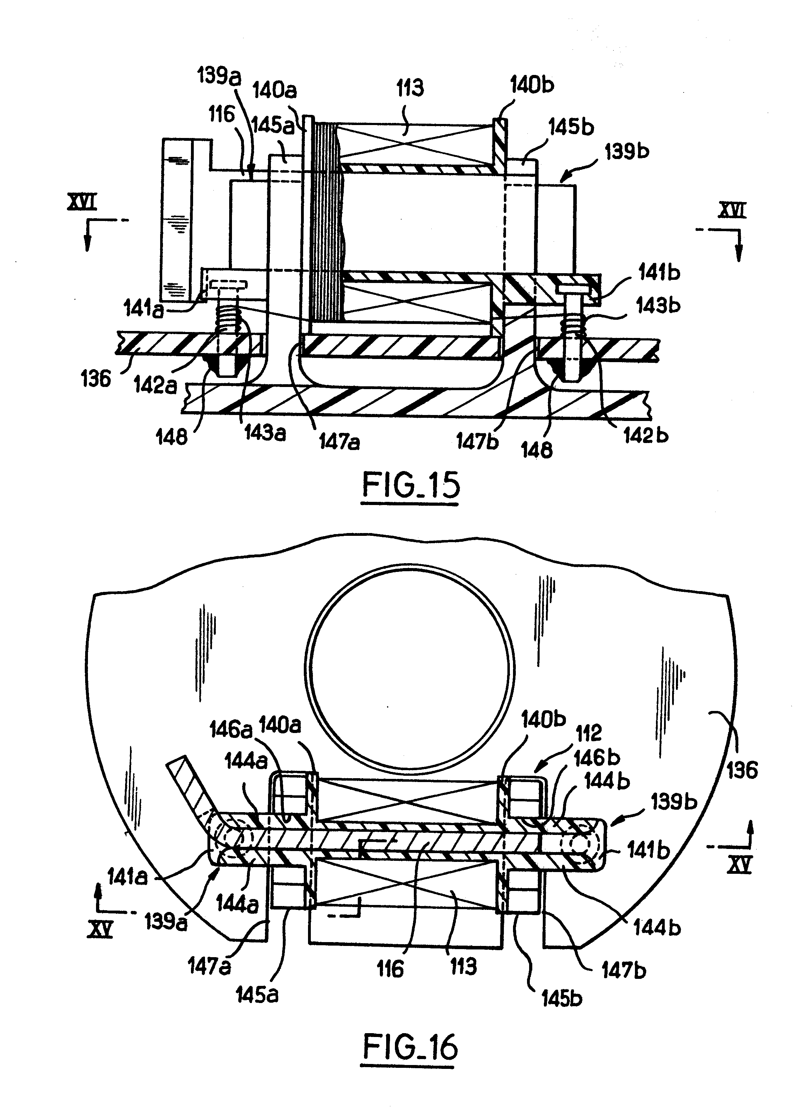

Les figures 15 à 17 représentent en ce qui concerne le stator une variante qui permet de réaliser automatiquement la liaison entre les extrémités de l'enroulement de la bobine et le circuit d'alimentation.

Dans l'automatisation du processus de montage d'un moteur commuté électroniquement, cette opération est l'une des plus délicates. En effet les extrémités des enroulements doivent être reliés électriquement au circuit d'alimentation et de commutation implanté sur le circuit imprimé. Si aucun dispositif particulier n'est prévu, les fils doivent en fin de montage être soudés manuellement sur le circuit imprimé ce qui est à la fois long et peu fiable surtout dans le cas des moteurs de faible puissance où les fils utilisés ont un diamètre très faible.

Dans l'exemple des figures 15 à 17, l'âme 112 de la bobine est munie de gouttières 139a et 139b situées dans le prolongement de son conduit axial 114, de part et d'autre des flasques d'extrémité 140a et 140. Chacun des fonds 141a et 141b desdites gouttières porte du côté opposé à l'intérieur de celles-ci, une broche 142a ou 142b (non représentée à la figure 17), réalisée en matériau électriquement conducteur.

Au bobinage, on entoure chaque broche 142a ou 142b avec l'une des extrémités de l'enroulement 113. Le noyau 116 de la pièce polaire est ensuite introduit dans le conduit 114 de la bobine, et maintenu par les parois latérales 144a et 144b des gouttières.

Le stator ainsi assemblé est monté sur la plaque de circuit imprimé 136, laquelle comporte deux trous dans lesquels s'engagent les broches 142a, 142b pour être soudées en même temps que les composants électroniques du circuit d'alimentation et de commutation.

La platine 4 comporte un chevalet formé de deux bras parallèles 145a et 145b dans lesquels sont pratiquées des échancrures longitudinales 146a et 146b. Dans la plaque de circuit imprimé 136 sont découpées des ouvertures 147a et 147b, de dimensions légèrement supérieures à la section transversale des bras 145a et 145b. Au montage, la plaque 136 est placée sur la platine 4 tandis que les bras 145a et 145b s'engagent dans les ouvertures 147a et 147b, puis les gouttières 139a et 139b s'introduisent à force dans les échancrures longitudinales 146a et 146b et y sont maintenues par l'élasticité de leurs parois latérales 144a et 144b, ce qui assure à la fois le maintien de la bobine et de la plaque 136 sur la platine 4.

Avant montage sur la platine 4, il est possible de raccorder par une soudure 148 le côté de la plaque 136 opposé à la bobine et l'extrémité libre de chaque broche 142a, 142b.

Grâce à la disposition qui vient d'être décrite, les liaisons électriques entre la bobine et le circuit imprimé sont réalisables en même temps que les liaisons entre le circuit imprimé et les autres composants qu'il porte. Le processus peut être automatisé sans qu'il soit nécessaire de prévoir, en bout de chaîne, une opération manuelle supplémentaire.

Bien entendu, l'invention n'est pas limitée aux exemples décrits et représentés, et de nombreux aménagements peuvent être apportés à ces exemples sans sortir de son cadre.

C'est ainsi que la bobine pourrait comporter deux enroulements bobinés en sens contraire et reliés alternativement à une source de tension par les moyens de commutation.

Il pourrait être prévu deux ensembles bobine-armature disposés par exemple symétriquement par rapport à l'axe XX.

L'angle F pourrait être égal à l'angle couvert par 2n pôles magnétiques permanents, par exemple 4 pôles, notamment si le nombre des pôles présentés par l'aimant permanent annulaire est plus grand que celui (6) choisi dans l'exemple représenté.

En vue d'accentuer la convergence de la pièce polaire avec le trajet des pôles magnétiques permanents, on peut donner à l'épanouissement polaire tel que 18 une obliquité par rapport à la tangente audit trajet face à l'épanouissement polaire. Cette obliquité est choisie dans le même sens que celle du noyau 16.

## Revendications

1. Moteur à courant continu commuté électroniquement, comprenant un rotor (22, 23) présentant sur une face annulaire des pôles magnétiques permanents déterminés par une aimantation radiale, ces pôles ayant alternativement des polarités Sud et Nord le long d'une direction circonférentielle ; un stator comprenant au moins une bobine (12) dont un axe (YY) s'étend selon une direction tangentielle par rapport à un axe (XX) du rotor, et qui entoure un noyau magnétique (16) appartenant à une armature (15) comprenant à l'une des extrémités du noyau (16) une pièce polaire (17, 18) située en regard du trajet des pôles magnétiques permanents ; un détecteur (37) de la position angulaire du rotor (22, 23) ; et des moyens de commutation (38) sensibles à un signal du détecteur (37) pour commuter le courant dans la bobine (12) en fonction de la position angulaire du rotor, caractérisé en ce que la face portant les pôles magnétiques permanents est une face interne du rotor (22, 23) et entoure l'armature (15) et la bobine (12), et en ce qu'à l'opposé de la pièce polaire (17, 18), l'extrémité (19) de l'armature (15) est constituée par une extrémité du noyau magnétique et située à distance du trajet des pôles magnétiques permanents et se trouve sensiblement entourée par l'extrémité de la bobine (12).

2. Moteur selon la revendication 1, caractérisé en ce que les moyens de commutation (38) sont adaptés à alimenter alternativement dans un sens et dans l'autre un enroulement (13) de la bobine (12).

3. Moteur selon la revendication 1, caractérisé en ce que la bobine comporte deux enroulements bobinés en sens contraires et alimentés alternativement par les moyens de commutation.

4. Moteur selon l'une des revendications 1 à 3, caractérisé en ce que la pièce polaire (17, 18) comprend une région (18) formant un angle obtus avec le noyau (16) de façon à sensiblement longer une partie du trajet des pôles magnétiques permanents.

5. Moteur selon la revendication 4, caractérisé en ce que la pièce polaire (17, 18) s'étend sensiblement d'un seul côté d'un plan passant par l'axe (YY) de la bobine parallèlement à l'axe (XX) du rotor.

6. Moteur selon l'une des revendications 1 à 5, caractérisé en ce que depuis l'extrémité de la bobine adjacente à la pièce polaire (17, 18) jusqu'à l'extrémité libre de la pièce polaire, l'armature (15) a un profil qui est généralement convergent avec le trajet des pôles magnétiques permanents.

7. Moteur selon l'une des revendications 1 à 6, caractérisé en ce que l'armature (15) est monobloc et présente un coude (17) au-delà de l'extrémité de la bobine adjacente à la pièce polaire (17, 18).

8. Moteur selon la revendication 7, caractérisé en ce que l'armature est réalisée à partir d'une lame dont la surface est sensiblement parallèle à l'axe (XX) du rotor.

9. Moteur selon la revendication 8, caractérisé en ce que le noyau (16) a, parallèlement à l'axe (XX) du rotor, une dimension moindre que les pôles magnétiques permanents, et en ce que l'armature (15) est épaulée pour donner à une partie (18) au moins de la pièce polaire une dimension axiale sensiblement égale à celle des pôles magnétiques permanents.

10. Moteur selon l'une des revendications 1 à 9, caractérisé en ce que la pièce polaire (17, 18) a une extrémité libre située du même côté que l'axe (XX) du rotor par rapport à un plan passant par l'axe (YY) du bobinage parallèlement à l'axe (XX) du rotor, et en ce que le détecteur de position (37) et les moyens de commutation sont agencés pour inverser le champ magnétique dans l'armature (15) chaque fois qu'une limite entre deux pôles magnétiques permanents adjacents passe sensiblement au droit de ladite extrémité libre de la pièce polaire de façon que la polarité de la pièce polaire (17, 18) tende toujours à être la même que celle du pôle magnétique permanent situé face à son extrémité libre.

11. Moteur selon la revendication 10, dans lequel le détecteur de position comprend une sonde à effet HALL (37) placée en regard du trajet des pôles magnétiques permanents, caractérisé en ce que la sonde (37) est positionnée angulairement autour de l'axe (XX) du rotor de façon à se trouver en regard d'une limite entre deux pôles magnétiques permanents en même temps que l'extrémité libre de la pièce polaire (17, 18).

12. Moteur selon l'une des revendications 10 ou 11, caractérisé en ce que chaque pôle magnétique permanent a par rapport à la pièce polaire (17, 18) une dimension angulaire telle, autour de l'axe (XX) du rotor, qu'en l'absence d'excitation de la bobine (12), le rotor prend par attraction entre la pièce polaire (17, 18) et un pôle magnétique permanent voisin de cette dernière une position (41) dans laquelle ce pôle s'étend le long de toute la pièce polaire (17, 18) et dépasse celle-ci au-delà de son extrémité libre.

13. Moteur selon l'une des revendications 1 à 12, caractérisé en ce que l'armature (15) s'inscrit dans un angle (F) centré sur l'axe (XX) du stator et correspondant sensiblement à l'étendue angulaire de 2npôles magnétiques permanents adjacents.

14. Moteur selon l'une des revendications 1 à 13, caractérisé en ce que chaque pôle magnétique permanent a une étendue angulaire de 60°.

15. Moteur selon l'une des revendications 1 à 14, caractérisé en ce que la bobine (12, 112) comprend une âme isolante (12a) présentant un conduit axial (14, 114) dans lequel est engagé l'armature (15).

16. Moteur selon la revendication 15, caractérisé en ce que le conduit axial (14) a un profil transversal épousant sensiblement le profil du noyau magnétique (16).

17. Moteur selon l'une des revendications 15 ou 16, caractérisé en ce que après introduction de l'armature (15) dans le conduit axial (14, 114) de la bobine (12, 112), le noyau magnétique (16) est engagé de part et d'autre de la bobine (12) dans des échancrures (10, 11, 146a, 146b) pratiquées dans deux bras (8, 9, 145a, 145b) d'un support, de façon à supporter en même temps la bobine (12, 112) et l'armature par rapport à une carcasse (1).

18. Moteur conforme à la revendication 17, caractérisé en ce que à l'opposé de la pièce polaire, l'extrémité (19) de l'armature (15) est coplanaire au bras (9) du support dans laquelle elle est maintenue.

19. Moteur selon l'une des revendications 17 ou 18, caractérisé en ce que le support (8, 9) est porté par un canon (6) de forme générale cylindrique dans lequel est engagé un arbre axial (27) du rotor.

20. Moteur selon l'une des revendications 1 à 19, caractérisé en ce qu'une platine (4) limite d'un côté l'espace entouré par les pôles magnétiques permanents (22).

21. Moteur selon la revendication 20, caractérisé en ce que des composants électroniques (38, Q1) faisant partie des moyens de commutation et le détecteur (37) de la position du rotor sont soudés sur un circuit imprimé (36) disposé sur la platine (4) du côté tourné vers l'intérieur de l'espace entouré par les pôles magnétiques permanents (22).

22. Moteur selon l'une des revendications 20 ou 21, caractérisé en ce que les pôles magnétiques permanents sont portés par des moyens magnétiques permanents (22) fixés à l'intérieur d'une cloche métallique (23) fermant l'espace précité du côté opposé à la platine (4).

23. Moteur selon la revendication 19, caractérisé en ce que l'intérieur du canon (6) est pourvu de nervures (31) qui définissent des portées (32) sur lesquelles vient buter une portée (30) chanfreinée d'un palier lisse (28) interposé entre le canon (6) et l'arbre axial (27) du rotor.

24. Moteur selon la revendication 19, caractérisé en ce que l'intérieur du canon est pourvu de saillies (35) disposées en couronne qui coopèrent avec une gorge annulaire (34) pratiquée dans la paroi externe d'un palier lisse (28) interposé entre le canon (6) et l'arbre axial du rotor (27).

25. Moteur selon l'une des revendications 15 à 20, caractérisé en ce que l'âme isolante de la bobine (112) est munie à chaque extrémité d'une broche conductrice (142a, 142b) à laquelle est raccordée une extrémité respective (143a, 143b) d'un enroulement de la bobine, ces broches étant soudées à un circuit imprimé (136) portant les moyens de commutation.

26. Moteur selon la revendication 25, caractérisé en ce que les broches (142a, 142b) sont encastrées dans une face externe du fond de gouttières (141a, 141b) prolongeant chacune le conduit axial (114) de l'âme de la bobine à l'une de ses extrémités.

**FIG.1**

**FIG. 3**

FIG. 2

0223678

0223678

FIG.4

FIG.5

FIG.6

FIG.7

FIG_8

6

6a

32

4

31

FIG_9

6

4

32

31

FIG_10

30  28  30

24

29

FIG.11

6

35

4

FIG.12

6

4

35

FIG.13

46  45  33  34  33  45  46

28

_FIG.14_

_FIG.17_

FIG.15

FIG.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 181 004  (THE METTOY CO.) <br> * Page 13, lignes  1-17;  figures 1,2 * | 1 | H 02 K   29/08 <br> H 02 K   29/00 <br> H 02 K   21/22 |
| A | * Page  14,  lignes 1-7; page 2, lignes  29-31;  page  3,  lignes 26,27; page 4, lignes 26-28 * | 2,5,19 ,20,22 | |
| | --- | | |
| Y | FR-A-2 285 738  (M.H. LAMEYER) <br> * Page  5,  ligne  25  - page 7, ligne 10; figure 3 * | 1 | |
| A | | 4,6 | |
| | --- | | DOMAINES TECHNIQUES RECHERCHES (Int. Cl.4) |
| D,A | EP-A-0 140 461  (ROTRON INC.) <br><br> * Page 7, lignes 7-18 * | 2,3-6, 11 | H 02 K <br> G 04 C |
| | --- | | |
| A | EP-A-0 125 502  (STANDARD ELEKTRIK LORENZ AG) <br> * Page 5,  ligne  29  -  page  6, ligne 2; figure 2 * | 12,21 | |
| | --- | | |
| A | DE-A-2 167 201  (A. MERKLE) <br> * Colonne 4, lignes 12-14 * | 23,24 | |
| | ----- | | |

Le présent rapport de recherche a été établi pour toutes les revendications

| Lieu de la recherche | Date d'achèvement de la recherche | Examinateur |
|---|---|---|
| LA HAYE | 12-02-1987 | STEINMETZ L.J.P. |